# FASCICULE DE BREVET EUROPEEN

(11) **EP 3 703 486 B1**
(45) Date de publication et mention de la délivrance du brevet: **03.11.2021**
(21) Numéro de dépôt: 18788815.1
(22) Date de dépôt: 24.09.2018
(51) Int. Cl.: A01D 46/26

(54) **MACHINE DE COLLECTE DE FRUITS MOBILE À POCHE VIDEUSE**
MOBILE FRUCHTSAMMELMASCHINE MIT ENTLEERUNGSTASCHE
MOBILE FRUIT COLLECTING MACHINE WITH EMPTYING POCKET

(30) Priorité: 31.10.2017 FR 1771149
(43) Date de publication de la demande: 09.09.2020
(73) Titulaire: Pellenc, 84120 Pertuis (FR)
(72) Inventeur: ROLLAND, Christian, 84160 Cucuron (FR); GIACALONE, Christophe, 83470 Saint Maximin la Sainte Baume (FR)
(74) Mandataire: Weber, Etienne Nicolas
(86) Numéro de dépôt international: PCT/FR2018/052336
(87) Numéro de publication internationale: WO 2019/086775

(56) Documents cités:
- ES-A1- 2 376 565
- FR-A1- 2 448 847
- FR-A1- 2 556 924
- FR-A1- 3 013 180

## Description

### Domaine technique

La présente invention concerne une machine de collecte de fruits mobile à poche videuse. Il s'agit en particulier d'une machine pour la collecte de petits fruits tels que des olives, des cerises, des noix ou des amandes, susceptibles d'être détachés des arbres par secouage ou gaulage.

Il s'agit plus précisément d'un dispositif de collecte à bâche ou à filet, la bâche ou le filet étant destinés à être disposés sous un arbre pour en recueillir les fruits tombés sous l'effet d'un secouage de l'arbre ou de ses branches ou encore sous l'effet d'un gaulage des fruits. La bâche ou le filet sont ensuite repliés ou enroulés vers le dispositif de collecte en entraînant les fruits tombés vers un réceptacle du dispositif de collecte.

L'invention trouve des applications dans le domaine de l'arboriculture fruitière et en particulier de l'olélculture, de la pruniculture et de la nucicutture fruitière, pour la récolte des fruits.

### Etat de la technique antérieurs

Dans la suite du texte, le terme « bâche » désigne indifféremment une bâche de collecte, un filet de collecte, ou tout objet présentant une surface de collecte apte à être utilisé dans le dispositif de collecte de fruits de l'invention.

L'état de la technique antérieure peut être Illustré par les documents suivants :
FR2558924
FR3013180
FR2905051
US5580635

Le document US5580635 montre une bâche de collecte de fruits disposée manuellement sous un arbre pour recueillir les fruits suite à une opération de secouage ou de gaulage. La bâche présente sur l'un de ses côtés un repli formant une poche. Ainsi, lors d'un repli de la bêche, un utilisateur peut rassembler progressivement les fruits tombés sur la bâche dans la poche.

Les documents FR2556924 et FR3013180 montrent des machines agricoles attelées et montées sur roues, comportant une bâche solidaire d'un tambour d'enroulement.

Afin de récolter les fruits d'un arbre, la bâche est déroulée du tambour, la machine étant immobilisée à proximité d'un l'arbre. La bâche est étendue au sol, sous l'arbre, en utilisant des chariots circulants dérouleurs pourvus de roues pour un roulage au sol. Les chariots dérouleurs fixés à l'extrémité libre de la bâche permettent d'exercer sur la bâche une traction propre à la dérouler du tambour et la tirer sous l'arbre. La bâche est de préférence fendue de manière à pouvoir s'étendre de part et d'autre d'un tronc de l'arbre.

Après l'extension de la bâche sous l'arbre, un secouage ou un gaulage permet de faire tomber les fruits de l'arbre sur la bâche. Bien que cette opération puisse être faite manuellement, elle est de préférence opérée en utilisant un secoueur motorisé portable, ou en ayant recours à des engins mobiles de secouage, motorisés et autonomes. Ces engins sont pourvus d'une pince de saisie du tronc des arbres et configurée pour le secouage du tronc. Les engins de secouage peuvent circuler, le cas échéant, sur la bâche, lorsqu'elle est étendue pour accéder au tronc.

Après le secouage de l'arbre, un moteur d'enroulement agit sur le tambour pour enrouler la bâche sur le tambour. L'enroulement de la bâche a pour effet d'acheminer les fruits tombés sur celle-ci vers un réceptacle de la machine de collecte. Pour éviter un roulement excessif des fruits sur la bâche et accompagner leur acheminement vers le réceptacle, la bâche peut être pourvue de nervures transversales à la direction de l'enroulement, c'est-à-dire, parallèles à l'axe du tambour d'enroulement. L'enroulement a lieu par le dessus du tambour de manière à faire tomber les fruits dans un réceptacle ménagé sous le tambour.

On peut d'ailleurs noter ici que la position de la bâche sur le haut du tambour est toujours plus haute que la position de la bâche au voisinage des chariots. forçant les fruits collectés à s'accumuler d'abord sur les nervures transversales pour ensuite les dépasser et s'accumuler de préférence sur la zone de la bâche située vers les chariots dérouleurs et donc à l'extrémité de la bâche.

Les chariots dérouleurs sont ainsi configurés de préférence de manière à surélever l'extrémité libre de la bâche de manière à éviter que des fruits ne roulent hors de la bâche par son extrémité libre. En outre, une plateforme est prévue pour un relevage des chariots dérouleurs en fin d'enroulement, de manière à parachever le déversement des fruits dans le réceptacle.

Le document FR2905051 montre une machine comparable dans laquelle les chariots dérouleurs circulants destinés au déroulement de la bâche sont remplacés par des chariots à pantographe.

Le fonctionnent des machines de collecte décrites ci-dessus peut présenter un certain nombre de difficultés qui se manifestent notamment dans le cas d'un terrain avec une forte déclivité ou qui sont accentués par la déclivité. La déclivité considérée ici est principalement la pente entre la partie de la machine comprenant le tambour de l'enrouleur de bâche et les chariots dérouleurs, lorsque la bâche est déployée au sol autour d'un arbre.

Lors de l'enroulement de la bâche sur le tambour, des fruits sont normalement entraînés en direction du tambour pour être déversés dans le réceptacle pour fruits. Cependant, en raison d'une différence de hauteur entre le tambour d'enroulement et l'extrémité libre de la bâche, les fruits ont tendance à rouler vers l'extrémité de la bâche lors de l'enroulement. Cette tendance peut être augmentée ou réduite selon la déclivité de la pente.

Ainsi, et selon la pente, une accumulation de fruits Importante peut se produire au voisinage des chariots dérouleurs, lors de l'enroulement de la bâche. Ceci demande alors l'utilisation de chariots dérouleurs de grande dimension, et donc lourds, pour supporter les fruits accumulés.

Ainsi, le relevage de ces chariots en fin d'enroulement, pour déverser les fruits dans le réceptacle disposé sous le tambour d'enroulement, requiert un mécanisme de relevage puissant

Accessoirement l'Intervention d'opérateurs peut s'avérer nécessaire pour un vidage complet de la bâche.

L'accumulation de fruits à l'extrémité de la bâche a également pour conséquence de provoquer un déversement inopiné de fruits par l'extrémité. L'extrémité de la bâche est certes soulevée par les chariots dérouleurs auxquels elle est attachée mais ce soulèvement peut s'avérer Insuffisant lorsque l'accumulation de fruits et/ou la pente du terrain sont importantes.

Dans ce cas, des fruits sont versés au-dessus des chariots dérouleurs et sont perdus, ou demandent, pour le moins, un ramassage manuel.

### Exposé de l'invention

L'invention a pour but de proposer une machine de collecte de fruits ne présentant pas les difficultés mentionnées ci-dessus.

Un but est en particulier de proposer une telle machine pour lequel le déversement des fruits en fin d'enroulement de la bâche est simplifié et facilité.

Un autre but est d'éviter une perte de fruits par l'extrémité libre de la bâche, c'est-à-dire l'extrémité reliée aux chariots dérouleurs.

Enfin un but est d'alléger et de simplifier le mécanisme de relevage des chariots dérouleurs et des fruits en fin d'enroulement de la bâche.

Pour atteindre ces buts, l'invention propose une Machine de collecte de fruits mobile comprenant :
- un réceptacle de fruits
- un enrouleur de bâche motorisé, avec un tambour d'enroulement agencé le long du réceptacle de fruits selon un axe d'enroulement. et ménagé en surplomb du réceptacle de fruits,
- au moins une bâche avec un bord longitudinal d'enroulement relié au tambour d'enroulement et s'étendant parallèlement à l'axe d'enroulement, et un bord longitudinal libre, opposé au bord longitudinal d'enroulement, la bâche pouvant être sélectivement enroulée sur le tambour d'enroulement dans une configuration de libération de fruits dans le réceptacle de fruits et déployée au sol dans une configuration de collecte de fruits,
- au moins un chariot dérouleur de la bâche, le chariot étant pourvu d'un train de roulage au sol, et
- un dispositif de fixation du bord longitudinal libre de la bâche au chariot dérouleur.

Conformément à l'invention,
- le dispositif de fixation comprend au moins un bras reliant le bord longitudinal libre de la bâche au chariot dérouleur,
- le bras est monté sur un train de roulage du chariot dérouleur, avec une liberté de pivotement entre une position basse, lorsque la bâche est dans la configuration de collecte de fruits et une position haute lorsque la bâche est dans une configuration de libération de fruits, et
- le bras maintient entre le bord longitudinal libre de la bâche et le train de roulage une distance supérieure à une hauteur d'un bord supérieur du tambour d'enroulement lorsque la bâche y est enroulée dans la configuration de libération de fruits, la hauteur étant mesurée par rapport à l'un parmi le sol et un support de chariot recevant le chariot dérouleur dans la configuration de libération de fruits, lorsque la machine est équipée d'un tel support.

Des bords latéraux de la bâche s'étendent entre le bord longitudinal d'enroulement et le bord longitudinal libre.

Un ou plusieurs bras peuvent être prévus pour relier le bord longitudinal libre de la bâche au chariot dérouleur. Une pluralité de tels bras est toutefois préférée. Dans la suite du texte, il est fait indifféremment référence au bras, au singulier ou au pluriel, sans préjuger du nombre de bras. Similairement, il est fait référence à un ou plusieurs chariots dérouleurs sans préjuger du nombre de chariots dérouleurs.

Comme évoqué précédemment, on procède à l'enroulement de la bâche après avoir étendu la bâche autour d'un arbre et après avoir secoué l'arbre pour en faire tomber les fruits. Or, lors de l'enroulement de la bâche. l'extrémité longitudinale libre de la bâche ainsi que les chariots dérouleurs qui y sont attachés sont tirés vers la partie principale de la machine, c'est-à-dire celle qui comprend l'enrouleur et le réceptacle de fruits. L'utilisation conformément à l'invention de bras pivotants de longueur suffisante entre l'extrémité de la bâche et les chariots dérouleurs, permet, en fin d'enroulement de la bâche, c'est-à-dire lorsque les chariots dérouleurs atteignent la partie principale de la machine, de soulever le bord longitudinal libre de la bâche au-dessus de l'enrouleur sans relever le train de roulage du chariot. En d'autres termes le train de roulage, et particulièrement les roues du chariot dérouleur peuvent rester en contact avec le sol, ou éventuellement en contact avec un support de chariot sur la partie principale de la machine.

Un tel support peut en effet être prévu en partie basse de la machine, le long de l'enrouleur pour y ranger les chariots lors d'un déplacement de la machine d'un arbre à l'arbre suivant.

Comme le train de roulage reste en contact avec le sol, ou éventuellement avec son support, le relevage de l'extrémité longitudinale libre de la bâche, pour le déversement des fruits, est affranchi du poids du ou des chariots dérouleurs.

Un mécanisme allégé peut ainsi être prévu pour le relevage de l'extrémité de la bâche.

En outre le ou les bras du chariot dérouleur peut accompagner l'extrémité de la bâche en constituant une barrière quasiment infranchissable pour les fruits.

La longueur du ou des bras, ou plus précisément la distance ménagée entre le train de roulage des chariots et le bord longitudinal libre de la bâche est choisie suffisante pour permettre un déversement des fruits au-dessus de l'enrouleur. Ceci correspond à la hauteur du bord supérieur du tambour d'enroulement sur lequel est reçue la bâche enroulée.

La distance entre le bord longitudinal libre de la bâche et le train de roulage s'entend par rapport à un point de contact du train de roulage avec le sol ou un support d'appui.

Le caractère pivotant des bras peut s'entendre par rapport à un axe de rotation de roues du chariot dérouleur, ou de préférence par rapport à des pivots de fixation des bras ménagés sur le train de roulage. Lorsque plusieurs bras sont prévus, le pivotement de chaque bras est de préférence indépendant de celui des autres bras. Les bras constituent alors des bras pivotants indépendante.

Selon un perfectionnement, le dispositif de fixation peut comporter une pluralité d'arceaux de fixation du bord longitudinal libre de la bâche, un pan d'extrémité de la bâche étant reçu autour des arceaux de fixation en formant une poche de collecte de fruits.

l'utilisation d'arceaux et d'une poche de collecte de fruits autour des arceaux permet de recueillir les fruits qui viennent å rouler vers l'extrémité de la bâche, notamment lors de l'enroulement de la bâche et/ou en raison de la pente du terrain. Une telle poche, formée autour d'arceaux s'avère constituer un barrage au passage des fruits bien plus efficace qu'un simple soulèvement de l'extrémité de la bâche.

Selon une réalisation préférée de la machine, celle-ci peut comporter une pluralité de bras à pivotement indépendant la pluralité de bras pivotants et la pluralité d'arceaux de fixation étant répartis le long du bord longitudinal libre de la bâche. L'utilisation d'une pluralité de bras et d'une pluralité d'arceaux de fixation le long de l'extrémité de la bâche autorise une flexibilité de l'extrémité de la bâche et de la poche de collecte de fruits permettant le cas échéant de suivre les inégalités du terrain sur lequel la bâche est étendue.

Cette caractéristique s'avère particulièrement intéressante lorsque le bord longitudinal libre présente une grande longueur et lorsqu'une pluralité de chariots dérouleurs sont utilisés.

Une pluralité d'arceaux de fixation peut être associée à un même bras pivotant. Toutefois et de préférence, chaque bras peut être associé à un arceau de fixation, individuellement.

En particulier, chaque arceau de fixation peut être formé d'une seule pièce avec le bras correspondant, dans le prolongement dudit bras.

Les arceaux peuvent présenter la forme d'une boucle fermée ou ouverte.

Tout comme les bras, ils sont réalisés en un matériau avec rigidité et une section suffisantes pour ne pas se déformer sous le poids des fruits recueillis dans la bâche.

Les bras et les arceaux peuvent être réalisés à partir de tubes ou de barreaux, métalliques ou en matière plastique. Il s'agit, par exemple, de bras et d'arceaux en nylon, en acier ou en aluminium.

Selon une particularité de réalisation les bras peuvent présenter une plage d'appui avec une courbure épousant la courbure du tambour avec la bâche enroulée, dans la configuration de libération de fruits. Cette forme permet aux bras de s'appuyer sur le tambour en fin d'enroulement de la bâche, sans risquer de blesser la bâche.

Selon un perfectionnement de l'invention, les arceaux peuvent former respectivement un cintre arriére en regard de l'enrouleur, le bord longitudinal libre de la bâche étant solidaire d'une partie supérieure du cintre arrière, et le pan d'extrémité de la bâche formant la poche de collecte de fruits étant partiellement libéré d'une extrémité inférieure du cintre arrière dans la position haute du bras.

La partie supérieure et inférieure du cintre s'entendent comme des parties situées au-dessus, respectivement en dessous d'un plan bissecteur horizontal des arceaux.

On considère que le cintre arrière est en regard de l'enrouleur lorsqu'il forme un C tourné vers l'enrouleur. L'arc du cintre arrière est dans ce cas opposé à l'enrouleur et tourné vers le chariot dérouleur.

Comme le bord longitudinal libre de la bâche est fixé au sommet du cintre, et non pas en bas du cintre, le pan de la bâche plaqué contre le bas du cintre arrière dans la position de collecte de fruits, peut en être décollé. Ceci a lieu dans la configuration de libération des fruits dans le réceptacle, c'est à dire lorsque les bras pivotants sont redressés dans leur position haute pour porter le bord longitudinal libre de la bâche au-dessus du tambour de l'enrouleur.

La poche s'en trouve partiellement libérée des arceaux, dans le sens d'une plus grande ouverture. Le déversement des fruits dans le réceptacle de fruits s'en trouve facilité.

Selon un autre perfectionnement de l'Invention, les arceaux peuvent présenter un cintre avant tourné à l'opposé de l'enrouleur.

Plus précisément. les arceaux peuvent former une boucle comportant d'une part le cintre arrière en regard de l'enrouleur, tel que décrit ci-dessus, mais aussi le cintre avant. Le cintre avant prend également une forme de C en regard du cintre arrière. Il n'est pas relié au bord longitudinal libre de la bâche. Lors de l'enroulement de la bâche, le cintre avant vient accompagner l'élévation de la poche de fruits en venant au contact de la bâche enroulée sur la machine et évitant ainsi un écrasement des fruits dans la poche avant que ceux-ci ne soient déversés dans le réceptacle.

Dans une réalisation particulière de la machine de collecte de fruits, le dispositif de fixation du bord longitudinal libre de la bâche peut comporter au moins l'une parmi une fixation par pinces. une fixation par rivets, et une fixation par œillets. Une telle fixation permet de rendre solidaire le bord longitudinal libre de la bâche et les bras, ou, le cas échéant, des arceaux à l'extrémité des bras.

Le dispositif de fixation peut aussi comporter un jonc reçu dans un fourreau du bord longitudinal libre de la bâche, et au moins une pince de maintien du jonc, solidaire d'au moins l'un du bras et de l'arceau de fixation. Cette configuration permet également de contribuer au maintien d'une distance entre deux arceaux consécutifs, dans le cas d'une pluralité d'arceaux de fixation.

Selon un perfectionnement, la machine, et plus précisément le chariot dérouleur, peut comporter une butée de limitation d'un débattement du bras dans la position basse, pour le maintien de la poche de collecte de fruits au-dessus du sol.

Ainsi, lors du déroulage de la bâche et en début d'enroulement de la bâche, les bras pivotants peuvent venir en butée basse et surélever la poche de collecte de fruits.

Ceci empêche que la partie de la bâche formant !a poche de collecte de fruits, et qui est susceptible d'être lourdement chargée de fruits lors de l'enroulement, ne frotte de façon importante sur le sol. En empêchant un tel frottement, une usure prématurée de la bâche, et notamment de son pan d'extrémité, est retardée ou évitée.

D'autres caractéristiques et avantages de l'invention ressortent de la description qui suit en référence aux figures des dessins.

La description est donnée à titre purement illustratif et non limitatif.

### Brève description des figures.

La figure 1 est une représentation schématique d'une machine agricole de collecte de fruits connue, associée à des engins secoueurs.
La figure 2 est une représentation schématique vue de dessus d'une bâche de collecte de fruits déployée au sol dans une configuration de collecte de fruits.
Les figures 3 à 6 sont des coupes latérales selon le plan vertical A-A de la figure 2 d'une machine de collecte de fruits conforme à l'invention lors de différentes étapes de l'enroulement d'une bâche de collecte de fruits.
Les figures 7 et 8 sont des vues de détail illustrant des fixations de la bâche de collecte de fruits.

### Description détaillée de modes de mise en œuvre de l'invention

Dans la description qui suit, des parties identiques similaires ou équivalentes des différentes figures sont repérés avec les mêmes signes de référence de manière à pouvoir se reporter d'une figure à l'autre.

Les figures sont exécutées en échelle libre.

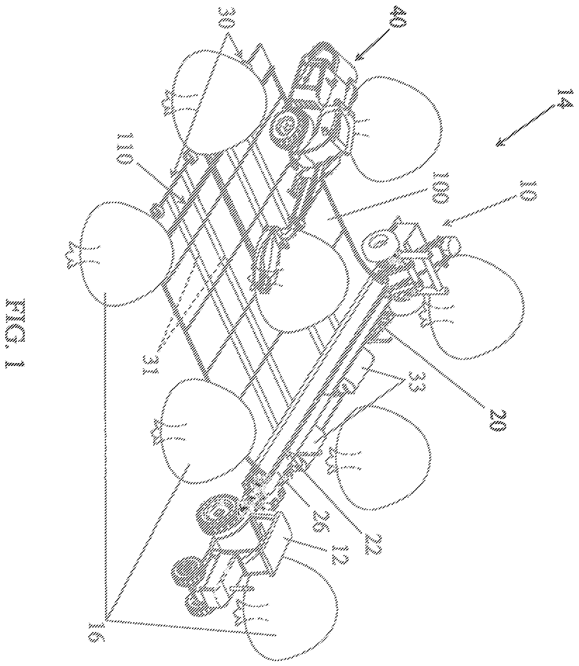

La figure 1 montre une machine agricole 10 de collecte de fruits connue par le document FR3013180 auquel il est fait référence.

Il s'agit d'une machine tractée, attelée à un tracteur agricole 12. Elle évolue dans un verger 14 avec un alignement d'arbres 16.

La machine, montée sur roues comprend un dispositif de collecte de fruits 20 pourvu pour l'essentiel d'une bâche 100, d'un enrouleur de bâche 22 motorisé et de chariots dérouleurs 30 à roues, solidaires d'un bord longitudinal libre 110 de la bâche.

La bâche présente une fente, et est disposée autour d'un arbre 16 à récolter. Le déploiement de la bâche a lieu, par l'intermédiaire des chariots dérouleurs 30 en tirant sur son bord longitudinal libre 110. Les chariots dérouleurs 30 sont mus par des rubans pousseurs 31, actionnés par la machine de récolte et passant sous la bâche. Les rubans pousseurs 31, cachés par la bâche 100 sont représentés en trait discontinu. Ils sont déroulés par des tambours moteurs 33.

Lorsque la bâche est étendue au sol autour d'un arbre. des engins secoueurs mobiles et autonomes 40 pourvus d'un puissant bras d'actionnement, sont mis en œuvre pour venir secouer l'arbre 16 entouré par la bâche 100. Le bras est utilisé pour secouer les arbres et en faire tomber les fruits. Les fruits sont recueillis sur la bâche 100. On peut observer que les engins secoueurs 40 sont susceptibles de circuler sur la bâche 100. Un secouage manuel ou un gaulage manuel, ou un secouage avec un équipement de secouage portable peut se substituer à l'utilisation d'engins secoueurs ou la compléter.

Après le secouage de l'arbre ou le gaulage de ses fruits, la bâche 100, est enroulée sur l'enrouleur 22. Au cours de cette opération les fruits présents sur la bâche sont acheminés vers le dispositif de collecte 20 et sont déversés dans un réceptacle longitudinal 26 s'étendant le long de l'enrouleur 22 et sous l'enrouleur.

Comme évoqué précédemment l'usage d'un tel dispositif peut occasionner des pertes de fruits quittant latéralement la bâche, ou peut occasionner des difficultés de passage des fruits au-dessus de l'enrouleur 22 vers le réceptacle.

La configuration générale de la machine de collecte de fruits de l'invention s'apparente également à celle décrite en référence à la figure 1. Des particularités propres à l'invention ressortent toutefois des figures suivantes.

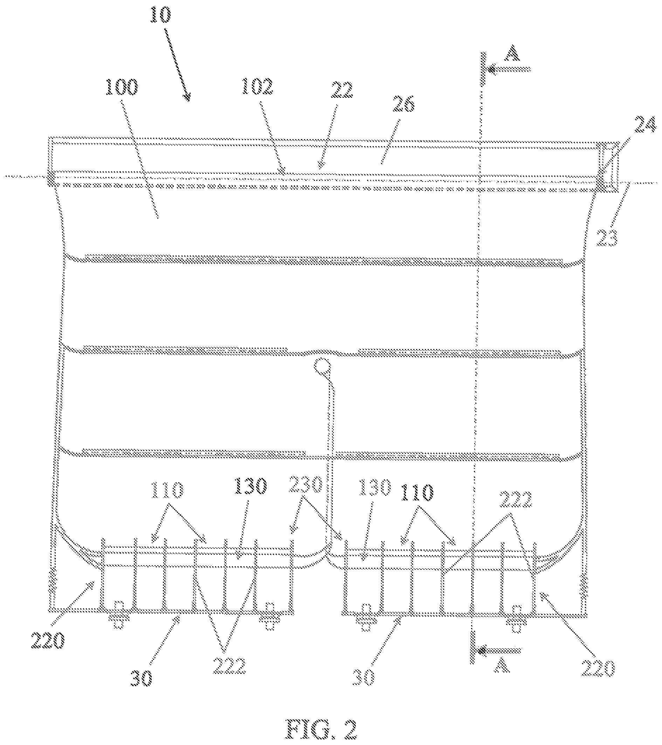

La figure 2 montre une vue de dessus d'une bâche de collecte de fruits conforme à l'invention dans une configuration de collecte de fruits.

Certaines parties de la machine comme, par exemple, les rubans pousseurs 31 et leurs tambours moteurs 33, visibles sur la figure 1, sont retirés de la figure 2 et des figures suivantes, par simplification.

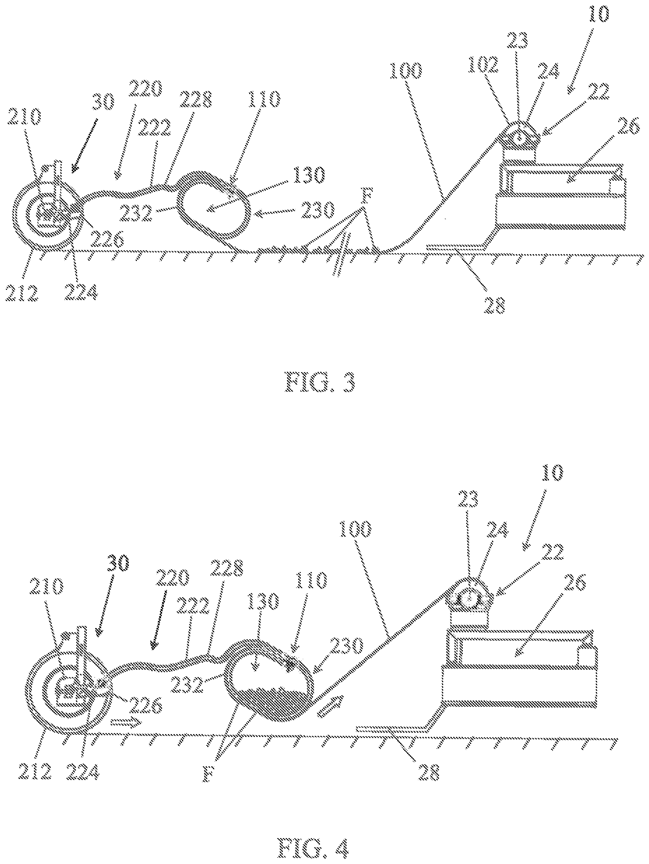

Les figures 3 à 6 sont des coupes latérales selon un plan vertical A-A de la figure 2 pour montrer différentes phases d'enroulement de la bâche afin de collecter les fruits de la bâche vers la machine de collecte. Elles ne prennent pas en compte le détail des reliefs de la bâche.

On peut reconnaître dans ces différentes figures 2 à 6 l'enrouleur 22 avec un tambour d'enroulement 24 recevant un bord longitudinal d'enroulement 102 de la bâche 100. Il est disposé au-dessus d'un réceptacle 26 pour fruits. Cette partie de la machine est identique à la machine connue mentionnée en référence avec la figure 1 à laquelle on peut se reporter. On peut noter dans la partie basse de la machine 10 un support de chariot 28 pouvant recevoir les chariots dérouleurs 30 lorsque la bâche 100 est enroulée sur le tambour 24 de manière à transporter les chariots dérouleurs lors d'un déplacement de la machine de collecte 10.

Les chariots dérouleurs 30, dont un seul est visible sur les figures 3 à 6, comportent un train de roulage au sol 210 pourvu de roues 212.

Un dispositif de fixation 220 relie le train de roulage 210 å un bord longitudinal libre 110 de la bâche 100. Le bord longitudinal libre 110 s'étend parallèlement à un axe d'enroulement 23, c'est à dire parallèlement à l'axe du tambour d'enroulement 24. Il est également parallèle au bord longitudinal d'enroulement 102.

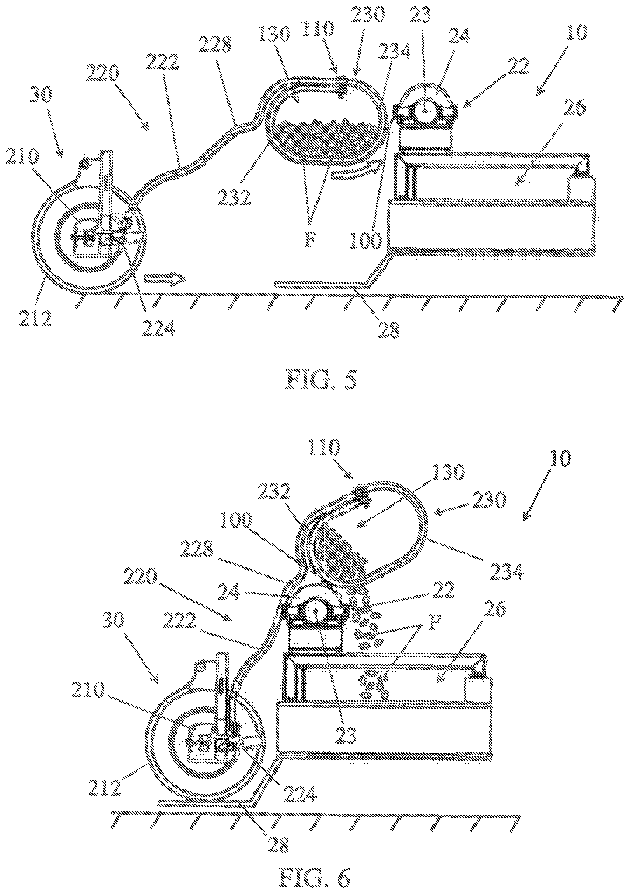

Le dispositif de fixation comprend une pluralité de bras pivotants 222 montés sur des pivots 224 du train de roulage 210. Les pivots s'étendent également parallèlement à l'axe d'enroulement 23. Les bras peuvent ainsi pivoter entre une position basse visible à la figure 3 et une position haute visible à la figure 6.

Une butée 226 limite le pivotement dans une position basse des bras visible à la figure 3.

Les bras pivotants se prolongent en des arceaux 230 qui forment une boucle. Une partie arrière de la boucle constitue un cintre arrière 232 formant un C tourné vers l'enrouleur.

Le bord longitudinal libre 110 de la bâche 100 est fixé sur les arceaux dans une partie correspondant au sommet du cintre arrière 232. Ainsi, un pan d'extrémité de la bâche 100 vient entourer le cintre arrière 232 en formant une poche 130 de collecte de fruits.

Les figures 2 et 3 correspondent à une configuration de collecte de fruits dans laquelle la bâche 100 est déployée au sol autour d'un arbre (non représenté). On peut noter, sur la figure 3, que la butée 226 des bras 222 maintient les arceaux 230 et donc la poche de collecte de fruits au-dessus du sol, sans contact avec le sol.

La partie de la bâche située entre la poche de collecte de fruits 130 et l'enrouleur 22 repose au sol et recueille les fruits F tombés à l'occasion d'un secouage ou d'un gaulage de l'arbre.

La figure 4 montre le début d'enroulement de la bâche 100. L'enroulement a lieu en faisant tourner le tambour d'enroulement motorisé 24. Une traction exercée sur la bâche 100 qui, au fur et à mesure de son enroulement sur le tambour, tire les chariots dérouleurs 30 vers l'enrouleur 22 et le réceptacle de fruits 26. Le mouvement d'enroulement de la bâche et le déplacement des chariots dérouleurs 30 sont indiqués par des flèches.

La mise sous tension de la bâche entre le tambour 24, surélevé, et les charlots dérouleurs 30 a pour effet, soit d'entrainer les fruits avec la bâche, en début d'enroulement, soit de faire rouler les fruits F vers les charlots dérouleurs. Les fruits F sont alors recueillis dans la poche de collecte de fruits 130.

En raison des butées 226 les bras 222 permettent de surélever les arceaux 230 et la poche de collecte de fruits 130 du sol. Un frottement au sol de la poche 130 lourdement chargée de fruits est ainsi évité ou tout au moins limité, de même qu'une usure de la bâche 100 autour des arceaux 230.

La figure 5 montre l'enroulement approchant de sa fin. Les charlots 30 et plus précisément les arceaux 230 atteignent la partie principale de la machine 10 comprenant l'enrouleur 22. La tension de la bâche soulève l'extrémité libre des bras 222 pourvue des arceaux 230 et formant la poche de collecte de fruits 130. Un pivotement des bras a lieu autour des pivots 224.

Lorsque les arceaux 230 atteignent le tambour 24, un cintre avant 234 des arceaux, opposé au cintre arrière 232, permet aux arceaux 230, entourés d'un pan d'extrémité de la bâche 100 de rouler sur le tambour et de passer au-dessus du tambour pour atteindre la position de la figure 6.

La figure 6 correspond à la configuration de libération des fruits F de la poche de collecte de fruits 130 dans le réceptacle de fruits 26. Les roues 212 des charlots dérouleurs 30 sont reçues sur le support de chariot 28. En l'absence de support les roues peuvent aussi rester au sol au voisinage du réceptacle de fruits 26.

On peut noter que la longueur des bras 222 est suffisante pour maintenir le bord longitudinal libre 110 de la bâche, et les arceaux 230 au-dessus du tambour 24 sur lequel la bâche 100 est enroulée.

Dans cette configuration, la partie du pan d'extrémité de la bâche entourant la partie basse du cintre arrière 232 n'est plus plaquée contre le cintre mais en est libérée. Ceci a pour effet d'ouvrir plus grandement la poche de collecte de fruits 130.

Les fruits sont ainsi déversés plus facilement dans le réceptacle de fruits 26.

On peut noter sur les figures 3 à 8 que les bras 222 ne sont pas rectilignes dans leur portion allant du pivot 224 sur le train de roulement 210 et l'arceau 230 qui les prolonge. Les bras présentent en particulier une plage d'appui 228 qui présente une courbure épousant la courbure du tambour 24 avec la bâche enroulée. Comme le montre la figure 6 la plage d'appui 28 vient en contact avec le tambour 24 en fin d'enroulement de la bâche, dans la configuration de libération de fruits. La courbure permet un contact réparti pour éviter une blessure de la bâche enroulée sur le tambour 24.

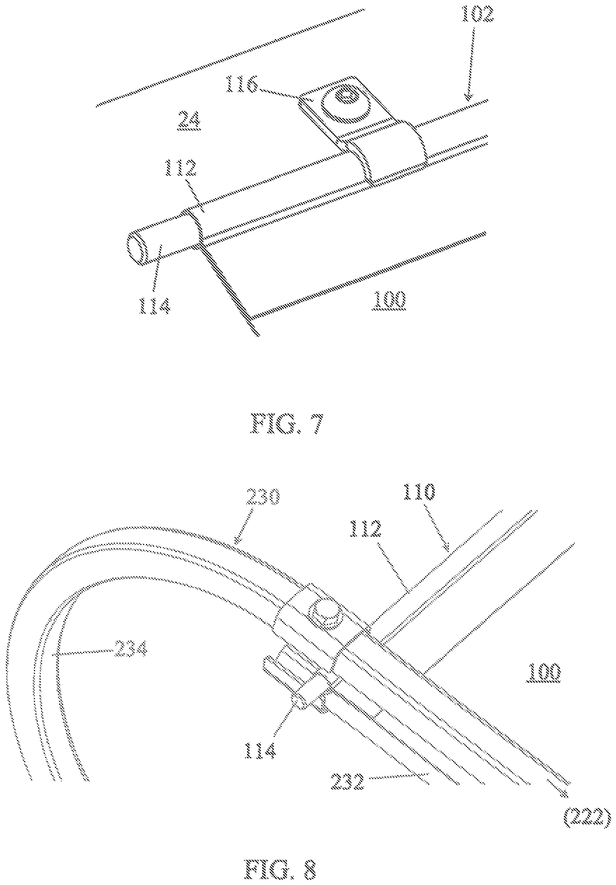

La figure 7 illustre un détail de la fixation de la bâche 100 sur le tambour 24.

La bâche 100 est pourvue à son bord longitudinal d'enroulement 102 d'un ourlet ou fourreau 112 recevant un jonc 114. Le jonc 114 est maintenu par des pinces 116 vissées au tambour 24.

La figure 8 montre un détail du dispositif de fixation 220 et plus précisément de la fixation du bord longitudinal libre 110 de la bâche 100 sur les arceaux 230 prolongeant les bras 222. La fixation utilise également un jonc 114 reçu dans un fourreau 112 de la bâche 100. Le jonc est maintenu par boulonnage et pincement entre une extrémité des bras 222 formant le haut du cintre arrière 232 et une partie opposée du bras formant l'arceau 230.

Une fixation comparable à celle de la figure 7 peut également être retenue pour la fixation du bord longitudinal libre de la bâche. Enfin, une fixation traditionnelle par œillets ou rivets peut se substituer aux fixations des figures 7 et 8.

## Revendications

1. Machine (10) de collecte de fruits, mobile, comprenant :
- un réceptacle de fruits (26),
- un enrouleur (22) de bâche, motorisé, avec un tambour d'enroulement (24) agencé le long de du réceptacle de fruits selon un axe d'enroulement (23) et ménagé en surplomb du réceptacle de fruits,
- au moins une bâche (100) avec un bord longitudinal d'enroulement (102) relié au tambour d'enroulement (24) et s'étendant parallèlement à l'axe d'enroulement, et un bord longitudinal libre (110), opposé au bord longitudinal d'enroulement (102), la bâche pouvant être sélectivement enroulée sur le tambour d'enroulement (24) dans une configuration de libération de fruits dans le réceptacle de fruits (26) et déployée au sol dans une configuration de collecte de fruits,
- au moins un chariot dérouleur (30) de la bâche, le chariot étant pourvu d'un train de roulage au sol (210), et
- un dispositif de fixation (220) du bord longitudinal libre (110) de la bâche au chariot dérouleur (30),
**caractérisé en ce que** :
- le dispositif de fixation (220) comprend au moins un bras (222) reliant le bord longitudinal libre (110) de la bâche (100) au chariot dérouleur,
- le bras est monté sur le train de roulage (210) du chariot dérouleur, avec une liberté de pivotement entre une position basse, lorsque la bâche (100) est dans la configuration de collecte de fruits et une position haute lorsque la bâche (100) est dans une configuration de libération de fruits, et
- le bras (222) maintient entre le bord longitudinal libre (110) de la bâche (100) et le train de roulage (210) une distance supérieure à une hauteur d'un bord supérieur du tambour d'enroulement (24) lorsque la bâche (100) y est enroulée dans la configuration de libération de fruits, la hauteur étant mesurée par rapport à l'un parmi le sol et un support de chariot (28) recevant le chariot dérouleur (30) dans la configuration de libération de fruits, lorsque la machine (10) est équipée d'un tel support.

2. Machine selon la revendication 1, dans laquelle le dispositif de fixation comporte (220) une pluralité d'arceaux de fixation (230) du bord longitudinal libre (110) de la bâche, un pan d'extrémité de la bâche (100) étant reçu autour des arceaux de fixation (230), formant une poche (130) de collecte de fruits.

3. Machine selon la revendication 2, comprenant une pluralité de bras (222) à pivotement indépendant, la pluralité de bras (222) et la pluralité d'arceaux de fixation (230) étant répartis le long du bord longitudinal libre de la bâche (110).

4. Machine selon la revendication 3, dans lequel chaque bras (222) est associé à un arceau de fixation (230).

5. Machine selon la revendication 4, dans laquelle chaque arceau de fixation (230) est formé d'une seule pièce avec un bras (222) correspondant, dans le prolongement dudit bras.

6. Machine selon l'une quelconque des revendications 2 à 5, dans laquelle les arceaux de fixation (230) présentent respectivement un cintre arrière (232) en regard de l'enrouleur (22), le bord longitudinal libre (110) de la bâche étant solidaire d'une partie supérieure du cintre arrière, et le pan d'extrémité de la bêche formant la poche de collecte de fruits (130) étant partiellement libéré d'une extrémité inférieure du cintre arrière dans la position haute du bras (222).

7. Machine selon l'une des revendications 2 à 8, dans laquelle les arceaux présentent un cintre avant (234) tourné à l'opposé de l'enrouleur.

8. Machine selon l'une quelconque des revendications 2 à 7, comprenant une butée (226) de limitation d'un débattement du bras (222) dans la position basse, pour le maintien de la poche de collecte de fruits (130) au-dessus du soi.

9. Machine selon l'une quelconque des revendications précédentes, dans laquelle le dispositif de fixation (220) du bord longitudinal libre de la bâche comprend au moins l'une parmi (110) une fixation par pinces, une fixation par rivets, et une fixation par œillets.

10. Machine selon l'une quelconque des revendications 2 à 7, dans laquelle le dispositif de fixation comprend un jonc (114) reçu dans un fourreau (112) du bord longitudinal libre (110) de la bâche (100), et au moins une pince de maintien du jonc solidaire d'au moins l'un du bras (222) et de l'arceau de fixation (230).

11. Machine selon rune quelconque des revendications précédentes, dans laquelle le bras présente une plage d'appui (228) avec une courbure épousant la courbure du tambour (24) avec la bâche enroulée, dans la configuration de libération de fruits.

## Patentansprüche

1. Mobile Fruchtsammelmaschine (10), umfassend:
- einen Fruchtbehälter (26)
- einen motorisierten Planenwickler (22) mit einer Wickelwalze (24), die entlang des Fruchtbehälters gemäß einer Wickelachse (23) angeordnet und über dem Fruchtbehälter überhängend angeordnet ist,
- mindestens eine Plane (100) mit einem Längswickelrand (102), der mit der Wickelwalze (24) verbunden ist und sich parallel zur Wickelachse erstreckt und einem freien Längsrand (110) gegenüber dem Längswickelrand (102), wobei die Plane selektiv in einer Fruchtfreigabekonfiguration in den Fruchtbehälter (26) auf die Wickelwalze (24) gewickelt und in einer Fruchtsammeikonfiguration auf dem Boden ausgebreitet sein kann,
- mindestens einen Abrollwagen (30) der Plane, wobei der Wagen mit einem Radfahrwerk (210) zum Fahren auf dem Boden versehen ist, und
- eine Befestigungsvorrichtung (220) des freien Längsrands (110) der Plane am Abrollwagen (30),
**dadurch gekennzeichnet, dass**:
- die Befestigungsvorrichtung (220) mindestens einen Arm (222) umfasst, der den freien Längsrand (110) der Plane (100) mit dem Abrollwagen verbindet,
- der Arm auf dem Radfahrwerk (210) des Abrollwagens mit einer Schwenkfreiheit zwischen einer niedrigen Position, wenn die Plane (100) in der Fruchtsammeikonfiguration ist, und einer hohen Position, wenn die Plane (100) in einer Fruchtfreigabekonfiguration ist, angebracht ist, und
- der Arm (222) zwischen dem freien Längsrand (110) der Plane (100) und dem Radfahrwerk (210) einen Abstand über einer Höhe eines oberen Randes der Wickelwalze (24) aufrechterhält, wenn die Plane (100) dort in der Fruchtfreigabeposition gewickelt ist, wobei die Höhe im Verhältnis zum Boden oder zu einem Wagenhalter (28) gemessen wird, der den Abrollwagen (30) in der Fruchtfreigabekonfiguration aufnimmt, wenn die Maschine (10) mit einem derartigen Halter ausgestattet ist.

2. Maschine nach Anspruch 1, wobei die Befestigungsvorrichtung (220) eine Vielzahl von Befestigungsbögen (230) des freien Längsrands (110) der Plane aufweist, wobei ein Endstück der Plane (100) um Befestigungsbögen (230) aufgenommen ist, wodurch eine Fruchtsammeltasche (130) gebildet wird.

3. Maschine nach Anspruch 2, umfassend eine Vielzahl von Armen (222), die unabhängig schwenken, wobei die Vielzahl von Armen (222) und die Vielzahl von Befestigungsbögen (230) entlang des freien Längsrandes der Plane (110) verteilt sind.

4. Maschine nach Anspruch 3, wobei jeder Arm (222) einem Befestigungsbogen (230) zugeordnet ist.

5. Maschine nach Anspruch 4, wobei jeder Befestigungsbogen (230) aus einem einzigen Teil mit einem entsprechenden Arm (222) in der Verlängerung des Arms gebildet ist.

6. Maschine nach einem der Ansprüche 2 bis 5, wobei die Befestigungsbögen (230) jeweils einen hinteren Bügel (232) aufweisen, der dem Wickler (22) zugewandt ist, wobei der freie Längsrand (110) der Plane mit einem oberen Teil des hinteren Bügels fest verbunden ist, und das Endstück der Plane, das die Fruchtsammeltasche (130) bildet, in der oberen Position des Arms (222) von einem unteren Ende des hinteren Bügels teilweise freigegeben ist.

7. Maschine nach einem der Ansprüche 2 bis 6, wobei die Bögen einen vorderen Bügel (234) aufweisen, der zum Wickler entgegengesetzt zeigt.

8. Maschine nach einem der Ansprüche 2 bis 7, umfassend einen Begrenzungsanschlag (226) eines Ausschlags des Arms (222) in der niedrigen Position für das Halten der Fruchtsammeltasche (130) oberhalb des Bodens.

9. Maschine nach einem der vorangehenden Ansprüche, wobei die Befestigungsvorrichtung (220) des freien Längsrands der Plane mindestens eine von (110) einer Befestigung durch Klammern, einer Befestigung durch Niete und einer Befestigung durch Ösen umfasst.

10. Maschine nach einem der Ansprüche 2 bis 7, wobei die Befestigungsvorrichtung einen Stab (114) umfasst, der in einer Hülse (112) des freien Längsrades (110) der Plane (100) aufgenommen ist, und mindestens eine Halteklemme des Stabs, die mit mindestens dem Arm (222) oder dem Befestigungsbogen (230) fest verbunden ist.

11. Maschine nach einem der vorangehenden Ansprüche, wobei der Arm einen Stützbereich (228) mit einer Krümmung aufweist, die in der Fruchtfreigabekonfiguration der Krümmung der Walze (24) mit der gewickelten Plane folgt.

## Claims

1. A mobile machine (10) for collecting fruit, comprising:
- a fruit receptacle (26),
- a motorised tarpaulin winder (22) with a winding drum (24) arranged along the fruit receptacle along a winding axis (23) and arranged overhanging the fruit receptacle,
- at least one tarpaulin (100) with a longitudinal winding edge (102) connected to the winding drum (24) and extending parallel to the winding axis and a longitudinal free edge (110), opposite the longitudinal winding edge (102), the tarpaulin being selectively wound on the winding drum (24) in a configuration of release of fruit in the fruit receptacle (26) and deployed on the ground in a fruit collection configuration,
- at least one carriage (30) for unwinding the tarpaulin, the carriage being provided with a gear (210) for running on the ground, and
- an attachment device (220) for attaching the longitudinal free edge (110) of the tarpaulin to the unwinding carriage (30),
**characterised in that**:
- the attachment device (220) comprises at least one arm (222) connecting the longitudinal free edge (110) of the tarpaulin (100) to the unwinding carriage,
- the arm is mounted on the running gear (210) of the unwinding carriage, with freedom of pivoting between a low position, when the tarpaulin (100) is in the fruit collection configuration and a high position when the tarpaulin (100) is in a fruit release configuration, and
- the arm (222) maintains between the longitudinal free edge (110) of the tarpaulin (100) and the running gear (210) a distance greater than a height of an upper edge of the winding drum (24) when the tarpaulin (100) is wound thereon in the fruit release configuration, the height being measured relative to one of the ground and a carriage support (28) accommodating the unwinding carriage (30) in the fruit release configuration, when the machine (10) is equipped with such a support.

2. The machine according to claim 1, wherein the attachment device includes (220) a plurality of hoops (230) for attaching the longitudinal free edge (110) of the tarpaulin, an end panel of the tarpaulin (100) being received around the attachment hoops (230), forming a fruit collection bag (130).

3. The machine according to claim 2, comprising a plurality of arms (222) independently pivoting, the plurality of arms (222) and the plurality of attachment hoops (230) being distributed along the longitudinal free edge of the tarpaulin (110).

4. The machine according to claim 3, wherein each arm (222) is associated with an attachment hoop (230),

5. The machine according to claim 4, wherein each attachment hoop (230) is formed integrally with a corresponding arm (222), in the extension of said arm.

6. The machine according to any one of claims 2 to 5, wherein the attachment hoops (230) respectively having a rear hanger (232) facing the winder (22), the longitudinal free edge (110) of the tarpaulin being integral with an upper part of the rear hanger, and the end panel of the tarpaulin forming the fruit collection bag (130) being partially released from a lower end of the rear hanger in the upper position of the arm (222).

7. The machine according to one of claims 2 to 6, wherein the hoops have a front hanger (234) facing away from the winder.

8. The machine according to any one of claims 2 to 7, comprising a stop (226) for limiting a movement of the arm (222) in the low position, for maintaining the fruit collection bag (130) above the ground.

9. The machine according to any one of the preceding claims, wherein the device (220) for attaching the longitudinal free edge of the tarpaulin comprises at least one of either (110) a clamp attachment, a rivet attachment, and an eyelet attachment.

10. The machine according to any one of claims 2 to 7, wherein the attachment device comprises a ring (114) received in a sleeve (112) of the longitudinal free edge (110) of the tarpaulin (100), and at least one clamp for maintaining the ring integral with at least one of the arm (222) and of the attachment hoop (230) .

11. The machine according to any one of the preceding claims, wherein the arm has a bearing pad (228) with a curvature matching the curvature of the drum (24) with the wound tarpaulin, in the fruit release configuration.
